# EUROPEAN PATENT SPECIFICATION

(11) **EP 4 105 526 B1**
(45) Date of publication and mention of the grant of the patent: **01.05.2024**
(21) Application number: 22179105.6
(22) Date of filing: 15.06.2022
(51) Int. Cl.: F16K 5/06, F16K 27/06, B23P 15/00, B23P 11/00

(54) **VALVE**
VENTIL
VANNE

(30) Priority: 15.06.2021 GB 202108517
(43) Date of publication of application: 21.12.2022
(73) Proprietor: Aalberts Integrated Piping Systems Limited, Doncaster South Yorkshire DN4 8DF (GB)
(72) Inventor: MACGREGOR, Robbie, Sheffield, S3 8RN (GB); WORSLEY, Alasdair, Worksop, S80 3QB (GB)
(74) Representative: Wilson Gunn

(56) References cited:
- EP-A1- 0 073 484
- EP-A2- 0 222 314
- WO-A1-2014/202096
- US-A- 3 584 833
- US-A- 5 890 286
- US-A1- 2005 205 827
- US-A1- 2015 219 235

## Description

### Technical Field of the Invention

The present invention relates to valves. In particular, but not exclusively, the invention concerns ball valves and a method of their assembly for use in plumbing and heating applications.

### Background to the Invention

Valves are commonly used components in the field of plumbing and heating which are used to control the flow of fluid through pipes. Ball valves are typically a type of quarter-turn valve which use a hollow, perforated and pivoting ball as the valve member to control the flow of material through them. In the typical function of a ball valve, the flow of material through a ball is enabled when the ball's hole is in line with the end caps of the ball valve and their connecting pipes and is disabled when the ball is pivoted 90 degrees by the valve's handle. The ball is typically connected to the handle by a stem, and capable of being set at various positions between the in-line and 90-degree disabled positions to regulate flow.

Ball valves traditionally comprise end caps, which as the name suggests, cap the ends of the body of the ball valve which houses the ball. The end caps are typically tubular and act as an end points to which further plumbing apparatus such as pipes may be attached.

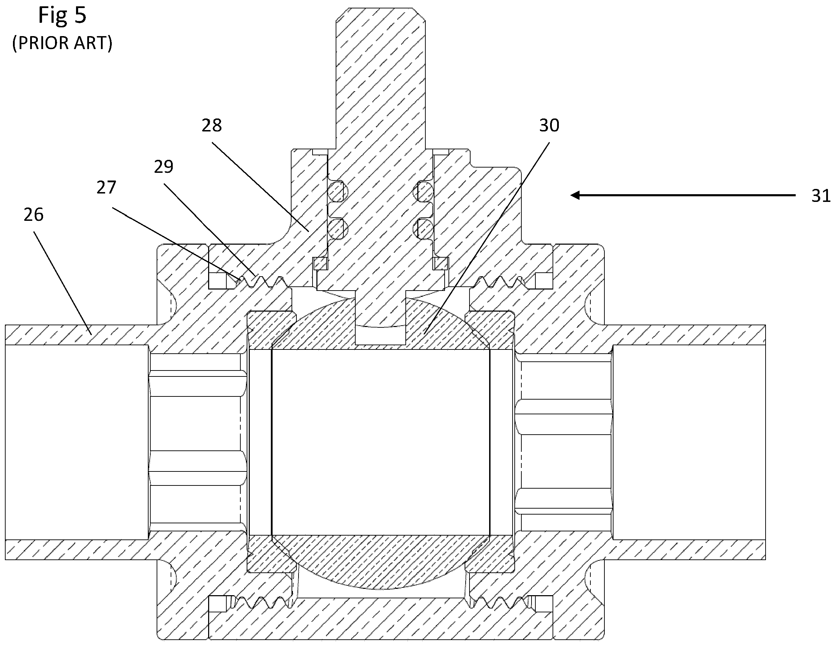

In the traditional production line construction methods of a ball valve 31, the end caps are attached to the body of the ball valve using threaded connections, as shown in figure 5, e.g. by screwing the end cap 26 itself having a threaded outer surface 27 into the correct position in relation to the valve body 28 via a corresponding threaded inner surface 29. In this approach, a skilled worker is required during production to ensure that, for each manufactured ball valve 31, sufficient pressure is placed on the ball 30 inside to form a seal and to secure the end caps 26 in place. If too much pressure is applied to the ball 30, this will result in an overly tight rotating valve mechanism, potentially impossible to turn. Too little pressure can result in a poor seal and resultant leakage. In order to prevent further adjustment of the threaded connections, glue is often used to secure the threads 27, 29 in place once the skilled worker has calibrated each ball valve 31.

Aside from the complexity of assembly outlined above, the traditional methods of ball valve manufacture require that the valve body and end caps are machined with corresponding threads, this requires space for the threading and accounts for an additional further manufacturing step, raising the production time and costs associated with such valves.

EP0073484A1 discloses an electrical isolating point for use in lengths of pipe, in which tubular sections engage with one another either over their entire length or at the ends, with an electrically insulating layer of inorganic insulating material arranged between them, to form a load-transmitting and sealing connection, characterised in that the layer of inorganic insulating material is impregnated with an electrically insulating, moisture-repellent substance.

The reader is also directed to the disclosure of US2005/205827A1, EP0222314A2, WO2014/202096A1, US5890286A, US3584833A and US2015/219235A1.

The present invention seeks to seeks to overcome or ameliorate the issues with current valve designs as discussed above, to offer a new type of valve design and its associated method of manufacture or at least provide an alternative.

### Summary of the Invention

According to a first aspect of the invention, there is provided a valve according to claim 1.

The use of a plasticly deformed lip to attach an end cap to a valve body results in a valve manufacturing process which may enable automation of the end cap fitting process, or reduce the skill required to form the fitting, obviating the difficult step of ensuring the parts are attached at the correct torque to achieve the right pressure discussed above. The inventive approach can thus reduce manufacturing and labour costs while ensuring greater consistency in the resulting products.

In addition, a plasticly deformed lip does not require threads to be formed on the valve body and end cap. Valves manufactured using the inventive approach can thus cost less to produce and require fewer manufacturing steps. A further benefit of not requiring threads is the possibility to reduce the dimensions, when compared to screw fitted valves as the overlap of a plasticly deformed lip can take up less space. This in turn can allow the valves to be introduced into tighter spaces than possible in the prior art.

Traditionally manufactured screw-fitted valves often require incorporated functional forms, such as hexagonal, spanner compatible shapes, in order to enable the skilled worker to gain a purchase on the components with their tools. These functional shapes enable control of the screwing action which in turn enables secure fitting. However, such valves often require additional material to form the required shapes, thus increasing the cost of metallic bar required for manufacture. The inventive approach of plasticly deforming at least one lip to form a tight connection removes the need for additional tool purchase point shaping, thereby reducing the amount of material (typically metallic bar) required for manufacture and hence cost. The seamless design associated with the plastic deformation process may also be considered more aesthetically pleasing, with smooth edges when compared to traditionally manufactured valves with visible purchase points for tool fitting.

The valve body may be substantially tubular in form, for example cylindrical tubular. The valve body may have at least two open ends. Two open ends may oppose each other. The open ends may be located on axial ends of the tubular valve body.

The end cap may be substantially tubular in form, having two open ends. The tubular form may for example be cylindrical tubular. The end cap may comprise an attachment end and a fitted end. The end cap may comprise an intermediate portion located between the attachment end (for attachment to a pipe in use) and the fitted end (fitted to the valve body). The attachment end and the fitted end may be at axially opposing ends of the respective end cap.

According to the invention the valve body comprises the plasticly deformed lip. In that case, the end cap comprises the connecting portion.

Having the valve body comprise the plasticly deformed lip enables a manufacturer to apply pressure more easily to the lip during the plastic deformation process.

The fitted end of the end cap comprises the connecting portion. The fitted end comprises a stop-face of the end cap. The fitted end comprises a housing portion (to accommodate a valve seat). The fitted end comprises a pipe-stop (to limit insertion of pipes during use of a completed valve).

The connecting portion may comprise a sloped surface. The sloped surface may begin at the interface between the intermediate portion and the fitted end. The sloped surface may end before reaching the stop-face of the end cap. The sloped surface may extend in a radial and axial direction. The sloped surface may comprise a linear or curved gradient. A sloped surface may reduce the risk of over-deforming the plasticly deformed lip during manufacture.

A bracing portion may be located between the sloped surface and the stop-face of the end cap. The bracing portion may have a fixed tubular outer diameter. At the stop-face of the end cap, the tubular outer diameter of the fitted end may reduce. The reduction of the tubular outer diameter at the stop face may be perpendicular to the bracing portion or the axis of the valve body.

The housing portion may extend beyond the stop-face of the end cap. The tubular cross-section of the housing portion may have a smaller outer diameter than the continuous tubular outer diameter of the bracing portion. The housing portion may have a larger inner diameter than the intermediate portion and/or the pipe stop of the fitted end. The housing portion may comprise a shoulder which leads onto the pipe-stop of the fitted end. The shoulder of the housing portion may form a flat face in a plane which is perpendicular to the axis of the valve body. The shoulder of the housing portion may be an inner annular plane which is perpendicular to the axis of the valve body.

The pipe-stop of the fitted end may be an inner portion of the fitted end which projects inwardly and comprises a stop-face. A face of the pipe stop may be configured to limit insertion of a pipe into the valve when used. The pipe-stop of the fitted end may be positioned next to the shoulder of the housing portion. The pipe-stop may extend from the shoulder of the housing portion toward the axial centre of the end cap.

The valve body comprises an inner ledge. The inner ledge may be configured to prevent insertion of a corresponding end cap into the valve body beyond a certain distance. The inner ledge provides a stop surface which abuts the stop-face of a corresponding end cap. The stop surface of the inner ledge and the stop face of the corresponding end cap may be annular. The inner ledge may be part of an obtruding region of the inner surface of the valve body.

The interaction between the inner ledge and the stop-face of the end cap means that the end cap and valve body can be machined so that they apply the correct amount pressure on the valve member (for instance a ball) when they are fitted during the plastic deformation of the lip. The distance of end cap insertion, and thus the pressure on the valve member, is controlled by the interaction of the inner ledge with the stop-face and the plastic deformation of the lip, which as discussed above is more easily automated and consistently reproduced. This removes the need for manual calibration of pressure on the valve member by a skilled manufacturer during assembly.

The valve body may comprise a thicker tubular portion and a thinner tubular portion. The thicker tubular portion may enclose the valve member. The thinner tubular portion may comprise the plasticly deformed lip. The inner ledge may be formed at the point where the thicker tubular portion meets the thinner tubular portion. The thicker tubular portion may be centred at the axial centre of the valve body. The thinner tubular portion may extend toward the axial end of the valve body away from the thicker tubular portion.

The plasticly deformed lip of the valve body may extend axially beyond the inner ledge. The tubular diameter of the plasticly deformed lip may reduce axially beyond the bracing portion. The tubular diameter of the plasticly deformed lip may reduce axially beyond the inner ledge. The inner surface of the plasticly deformed lip may conform to the sloped surface of the connecting portion. The plasticly deformed lip may also envelop a sealing member, such as an O-ring.

Plastic deformation of the lip to conform to the sloped surface of the connecting portion enables a compact watertight seal to be formed.

The attachment end may be positioned outside the valve body. The fitted end may be positioned within the valve body.

The thicker tubular portion of the valve body may enclose the housing portion of the end cap. The housing portion of the fitted end may engage with a valve seat, wherein the valve seat engages with the valve member. The valve seat may be a housing ring. Two or more valve seats may secure the valve member in place. The housing portion may alternatively engage with the valve member.

Having a valve seat sit inside the housing portion of the end cap means that the pressure applied to the valve member by the valve seat is determined by the extent of insertion of the end cap into the valve body. As the insertion of the end cap is determined by the abutting of the stop-face of the end cap and the inner ledge of the valve body, the amount of pressure applied to the valve member may be carefully configured based on dimensional design of the valve components. This removes the need for a skilled person to carefully calibrate the amount of pressure applied to the valve member by either of the end caps, thereby streamlining the production process.

A sealing member may be provided between the valve body and the end cap. The sealing member may be provided between the plasticly deformed lip and the connecting portion. For example, the plasticly deformed lip may be formed around an O-ring and the connecting portion. The connecting portion may be provided with a seat for the seal. In an alternative, the sealing member may be provided between the housing portion of the end cap and the valve body. For example, a circumferential indentation may be provided as a seat for an O-ring. The fitted end and/or the valve body may comprise the seat. For example, the indentation is preferably located around an outer curved surface of the fitted end of the end cap, but may alternatively, or additionally, be located around an inner curved surface of the valve body.

Incorporation of sealing members means that the plasticly formed connection between the lip of valve body and the connecting portion of the end cap may especially watertight.

The plasticly deformed lip is preferably formed of metal. The connecting portion is preferably made from metal.

The valve body and the end cap may enclose the valve member. The valve body may further enclose at least a portion of a valve member controlling means. The valve member controlling means may be a rotatable stem. An opening on the surface of the valve body may be configured to accommodate the valve member controlling means. The opening on the surface of the valve body may open in a direction which is radial (and perpendicular) to the tubular axis.

The valve is preferably a ball valve. The valve may alternatively be one of a butterfly valve, a globe valve, a plug valve and a gate valve as non-limiting examples.

The valve member may be configured to be operable in a fixed location relative to the valve body. The valve member may operable by rotation. The valve member is preferably a ball-like shape with a hole passing through its centre. The hole preferably follows a straight line which is perpendicular to an axis of rotation of the valve member.

The valve member may comprise engagement means. The engagement means may be configured to engage with a stem.

The valve member may be configured to rotate about an axis of rotation when driven by the stem. The valve member and the stem may share the same axis of rotation.

The valve body may comprise three or more open ends. The valve member may be configured to accommodate three or more entry points.

The valve may comprise a number of end caps which correspond to the number of open ends of the valve body. Each end cap may be fitted to the valve body as described for a singular end cap.

According to a second aspect of the invention, there is provided a method of assembling a valve according to claim 11.

Use of the inner ledge and the stop-face means that the maximum insertion distance of the end cap relative to the valve body may be automatically configured during the valve body and end cap fabrication processes. This process, in combination with the plastic deformation (which is more easily automated), removes the need to fine-tune the insertion distance of the end cap, or calibrate pressure on the valve member during assembly.

The method comprises the step of inserting a valve seat into the valve body. The valve seat is inserted prior to the insertion of the end cap. The valve seat is be inserted into a housing portion of a fitted end of the end cap prior to insertion of the end cap into the valve body.

The method may comprise the step of attaching a sealing member to the end cap to the end cap. The attachment of the sealing member to the end cap may occur before or after the insertion of the end cap. The sealing member may be secured to the end cap or the valve body using a sealing member housing indentation. The sealing member may be positioned between the lip and the connecting portion. The sealing member may be an O-ring.

The method comprises plasticly deforming the lip such that it at least partially envelops the corresponding connecting portion. The plasticly deformed lip may completely envelop the corresponding connecting portion.

The plasticly deformed lip may be plasticly deformed by a process of coining. Alternatively, the plasticly deformed lip may be plasticly deformed by a process of at least one of bending, rolling, clinching or stamping. The plasticly deformed lip may be deformed by subjecting the lip to stress which induces plastic flow in the lip. The plasticly deformed lip may be deformed such that the lip at least partially conforms to the corresponding connecting portion.

The process of plastic deformation is known to reduce surface grain size of some metals and may work harden the plasticly deformed surface. Plasticly deforming a lip to attach an end cap to a valve body may thus result in a strong, work-hardened connection.

According to the invention, the end cap comprises the connecting portion and the valve body comprises the lip.

The method may comprise the step of using a pressing element to press the lip. The at least one pressing element may be substantially tubular in form and may comprise a pressing portion. The pressing portion may be configured to engage with the lip. The pressing portion may be located at an inside edge at an axial end of the tubular pressing element. The pressing portion may comprise a chamfered edge. The chamfered edge of the pressing portion may be configured to apply force to the at least one lip in a radially inward direction. The chamfered edge of the pressing portion may be formed by a linear or curved increase in the inner radius of the pressing element toward the axial end of the pressing element.

The method may comprise the step of inserting the valve body or the at least one end cap into a support or holding apparatus prior to plastic deformation of the at least one lip.

A face of the pressing element may be configured to abut a face of the support or holding apparatus during the process of pressing the lip.

The abutting of the faces would prevent over-deformation of the plasticly deformed lip and would help to ensure the consistency of resultant plasticly deformed lips.

The method may comprise fitting one or more additional end caps following attachment of a first end cap.

In cases where there are one or more additional end caps, the first end cap and an optional O-ring may be inserted into the valve body and a corresponding lip may be plasticly deformed prior to optional insertion of a valve seat and insertion of the valve member. Following plastic deformation of the lip associated with the first end cap, the valve member may be inserted. Following insertion of the valve member, one or more additional end caps and associated optional valve seats and O-rings may be inserted into the valve body. The lips associated with the one or more additional end caps may be plasticly deformed to attach the one or more end caps to the valve body, thereby securing the valve member in position. Valve seats may be inserted into housing portions of end caps prior to insertion of the respective end caps into the valve body. O-rings may be attached to end caps prior to insertion of the respective end caps into the valve body.

### Detailed Description of the Invention

In order that the invention may be more clearly understood an embodiment thereof will now be described, by way of example only, with reference to the accompanying drawings, of which:
- Figure 1: shows an exploded perspective view of a ball valve and its associated components;
- Figures 2A-B: show part-cutaway side perspectives of the ball valve of figure 1, with figure 2A showing the components prior to plastic deformation and figure 2B showing the components after plastic deformation;
- Figures 3A-B: show close up part-cutaway side perspectives of the ball valve of figure 1, with figure 3A showing the components prior to plastic deformation and figure 3B showing the components after plastic deformation;
- Figures 4A-B: show part-cutaway side perspectives of the valve body, the end cap and a coining tool, with figure 4A showing the valve body, the end cap and the coining tool before pressing and figure 4B showing the valve body, the end cap and the coining tool during pressing; and
- Figure 5: shows a cross-sectional view of a prior art ball valve.

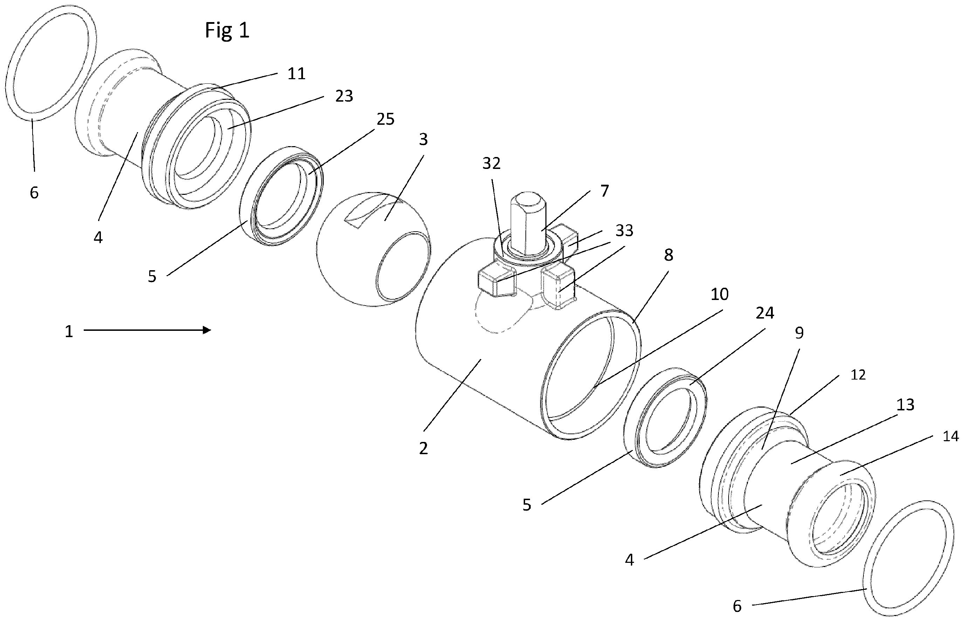

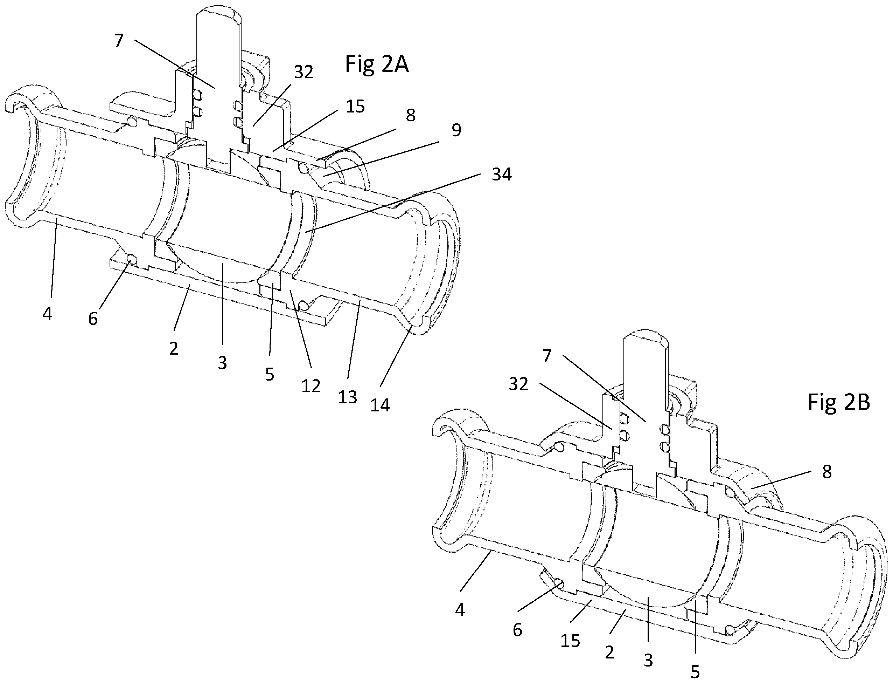

The present disclosure concerns a valve and a method of assembly of the valve. Referring to figures 1 to 4B, the valve 1 of the preferred embodiment comprises a valve member 3, a valve body 2 and an end cap 4; wherein the end cap 4 comprises a connecting portion 9; and the valve body 2 comprises a plasticly deformed lip 8; wherein the plasticly deformed lip 8 is configured such that it at least partially envelops the connecting portion 9, thereby attaching the end cap 4 to the valve body 2. Figures 1, 2A, 3A and 4A depict the lip 8 prior to plastic deformation and figures 2B, 3B and 4B depict the lip 8 following or during plastic deformation.

As can be seen from figure 1, the valve 1 is a ball valve, comprising a valve body 2, a valve member 3 in the form of a ball, end caps 4, valve seats 5, sealing members in the form of O-rings 6, and a stem 7. It will be appreciated that the stem will be secured in place using seals and spacers (not shown). It will also be appreciated that a valve handle (not shown) would be attached to the stem 7 of the valve to enable valve operation.

The valve member 3 as shown in the figures is substantially spherical in form, having a channel which runs in a straight line through the body of the ball, to enable to passage of liquids through the valve member when the valve member 3 is aligned with the attachment ends 14 of the end caps 4, as depicted in Figures 1 to 3B. When the channel of valve member 3 is arranged perpendicularly (not shown) to the attachment ends 14 of the end caps 4, the passage of liquid through the valve member 3 is prevented. A notch located at the top of the ball enables engagement with the stem 7. The valve member 3 is secured in position by a pair of valve seats 5.

The valve body 2 comprises a central, thicker tubular portion 15 and thinner tubular portions which form lips 8. The lips 8 are located at the axial ends of the thicker tubular portion 15. The end cap 4 comprises the connecting portion 9 at a fitted end 12 of the end cap 4, the fitted end 12 of the end cap 4 being the end of the end cap 4 which is fitted to the valve body 2.

The end cap 4 further comprises an intermediate portion 13 and an attachment end 14, the attachment end 14 being configured to receive a pipe during use. The intermediate portion 13 is positioned between the fitted end 12 and the attachment end 14. During assembly, the lip 8 is plasticly deformed such that it envelops a sealing member 6 and the connecting portion 9 of the fitted end 12, as depicted in figures 2B, 3B and 4B.

Reference is now made to figures 1, 2A, 3A and 4A which show components of the valve prior to plastic deformation. The valve body 2 is substantially tubular in form, namely a cylindrical tube as shown clearly in figure 1, having two open ends located at the ends of the lips 8 of the valve body 2. The two open ends are located at axially opposing ends of the tubular form of the valve body 2.

A stem housing region 32 also extends out of the curved surface of the tubular form of the valve body 2, as shown in Figure 1. The stem housing region 32 is also substantially tubular in form, with a cylindrical axis which is perpendicular to the axis of the larger tubular form of the valve body. The stem housing region is configured to accommodate the stem 7 of the valve and any spacers, seals and/or O-rings associated with the stem 7. The stem housing region 32 also comprises optional protruding stubs 33, as shown in figure 1 which may act as engagement portions for valve handle locking mechanisms (not shown).

In this particular embodiment, the thicker tubular portion 15 of the valve body and the thinner tubular portions of the valve body which form the lips 8 have the same outer diameter (to provide a neat outer surface) prior to plastic deformation, while the thinner tubular portions of the valve body 2 have a larger inner diameter than the thicker tubular portion 15. The interfaces between the thicker tubular portion 15 and the thinner tubular portions form inner ledges 10. The inner ledges 10 are radially extending annular faces, with a plane which is perpendicular to the axial direction of the valve body 2.

The valve body 2 is preferably formed from a plasticly deformable material such as metal.

The valve 1 preferably comprises two end caps 4 as shown in figures 1 to 3B. When attached to the valve body 2, each end cap is socketed within a respective open end of the valve body.

Each end cap 4 is substantially cylindrically tubular in form, having two open ends. Each end cap comprises an attachment end 14 and a fitted end 12. Each end cap comprises an intermediate portion 13 located between the attachment end 14 and the fitted end 12. The attachment end 14 and the fitted end 12 are located at axially opposing ends of each respective end cap.

The intermediate portion 13 has a consistent inner and outer diameter, having a fixed tubular thickness. The inner diameter is dimensioned to accommodate a pipe when the fully assembled valve is used. It would be obvious to a person skilled in the art that various diameters of valves can be produced to accommodate different standard sizes of pipe.

The attachment end 14 of this embodiment is a conventional press fit bead sized to accommodate a sealing member in the form of an O-ring and intended to be pressed for attachment to pipes. It will be appreciated that other styles of attachment end may be utilised in other embodiments.

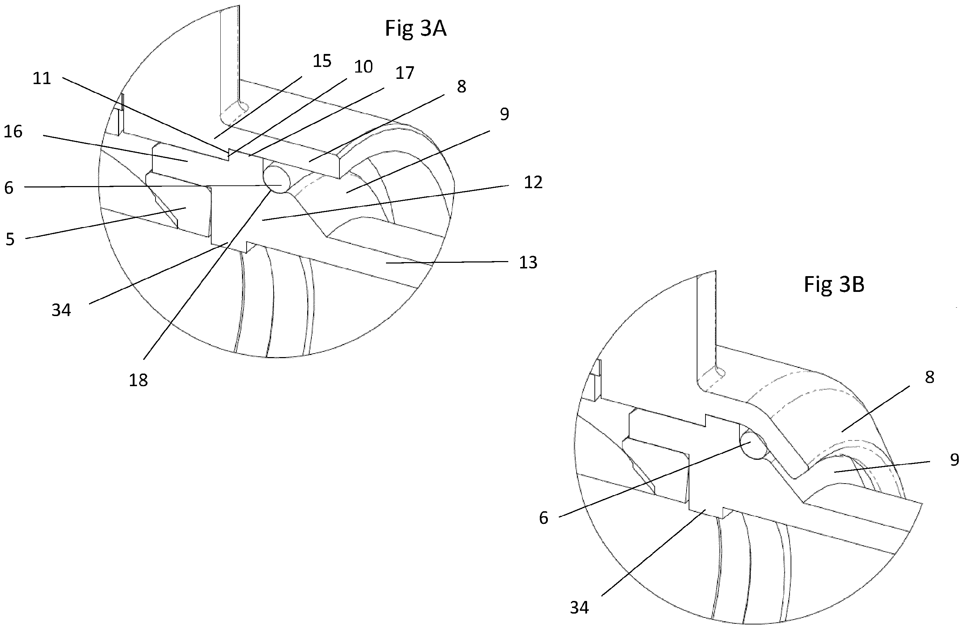

The fitted end 12 of each end cap comprises a connecting portion 9. The connecting portion 9 extends from the interface between the intermediate portion 13 and the fitted end 12. The connecting portion 9 has an increasing outer diameter and an inner diameter which remains the same as the intermediate portion 13. The increasing outer diameter forms a frustoconical sloped surface. The sloped surface of the preferred embodiment has a linear gradient. This is best viewed in figure 3A. A sealing member seat 18 is formed by the outer radius of the connecting portion levelling off to run parallel with the inner radius of the fitted end and then increasing such that it curves to form a face which is perpendicular to the tubular axis of the end cap. During assembly, a sealing member 6 (in the form of an O-ring) with a relaxed diameter which is slightly less that the diameter of the sealing member seat 18 is placed onto the sealing member seat 18.

A bracing portion 17 is situated next to the connecting portion 9, the bracing portion 17 having a continual outer diameter. The bracing portion 17 has a slightly smaller outer diameter than the inner diameter of the lip 8 of the valve body 2 prior to plastic deformation of the lip 8, thereby enabling insertion of the bracing portion 17 into the valve body 4. The bracing portion 17 is large enough in diameter such that it forms a tight fit which centres the end cap 4 within the valve body 2 when inserted into the cavity formed by the lip 8. This enables each end cap 4 to be securely held in a radially central position relative to the valve body 2 during assembly of the valve 1.

The end cap 4 comprises a stop-face 11, best viewed in figure 1, at the end of the bracing portion 17 which is nearer to the open end of the fitted end 12 of the end cap 4. The stop-face 11 is an annular face in a plane which is perpendicular to the axis of the valve body 2, formed where the outer diameter of the fitted end abruptly reduces. The stop-face of the end cap 4 is configured to have dimensions which correspond with an inner ledge 10 of the valve body 2, such that when the end cap 4 is inserted into the valve body 2, the stop-face 11 of the end cap 4 abuts the inner ledge 10 of the valve body 2, preventing further insertion.

The end cap 4 extends with a continual outer diameter between the stop-face 11 and the open end of the fitted end 12, forming the outside of a housing portion 16 of the end cap 4. The outer diameter of the housing portion 16 is slightly smaller than the inner diameter of the thicker region of the valve body 15, enabling tight-fitting insertion of the housing portion 16 of the end cap 4 into the thicker region 15 of the valve body 2 until the stop-face 11 of the end cap 4 abuts the inner ledge 10 of the valve body 2. At the open end of the fitted end 12 of the end cap 4, the edge at the outer diameter of the housing portion 16 tapers inwardly slightly, enabling easier insertion of the end cap 4 into the valve body 2. The open end of the fitted end 12 has a flat face in a plane which is perpendicular to the axis of the valve body 2. At the open end of the fitted end, continuing into the end cap 4, the housing portion 16 has an inner diameter which is continual and larger than the inner diameter of the intermediate portion 13, the inner diameter of a pipe-stop 34 (as seen in figures 3A and 3B) and the inner diameter of the connecting portion 9. The larger inner diameter enables sufficient space to receive a valve seat 5. The larger inner diameter of the housing portion 16 continues into the end cap for a distance which accommodates insertion of the valve seat 5, after which, the inner diameter of the housing portion 16 abruptly decreases, forming an inner annular plane 23 at the inner end of the housing portion 16. The inner annular plane 23, as shown in figure 1 is located at the end of the housing portion 16 and next to the pipe-stop 34 such that it accommodates and limits the insertion of the valve seat 5 into the housing portion 16.

After the inner annular plane 23 of the housing portion 16, The pipe-stop 34 extends with an inner diameter which continues in a direction toward the connecting portion 9. The pipe-stop 34 has an inner diameter of the pipe-stop 34 then abruptly increases to match the inner diameter of the connecting portion 9, forming a pipe-stop 34 engagement surface. The pipe-stop 34 is shaped by the decrease and increase of inner diameter between the housing portion 16 and the connecting portion 9. After the engagement surface of the pipe-stop 34, the inner diameter of the end cap 4 remains the same from the connecting portion 9 until it reaches the attachment end 14. The engagement surface of the pipe-stop 34 forms a plane which is perpendicular to the axis of the valve body. The engagement surface of the pipe-stop 34 is used to engage with pipes and limit their insertion when pipes are fitted to the valve following valve assembly.

The end caps 4 are preferably formed from a strong and machinable material such as a metal, for example brass.

The valve seats 5 are ring-like in shape, each having an annular flat face 24 at one end, the annular flat face 24 is dimensioned such that it corresponds to and abuts the inner annular plane 23 of the housing portion 16 when the valve seat 5 is inserted into the housing portion 16.

Each valve seat 5 comprises a ball engaging surface 25 which is configured to engage with the ball of valve member 3. The ball engaging surface is located at the opposite end of the valve seat 5 to the annular flat face 24 which is configured to abut the inner annular plane 23 of the housing portion 16 of the end cap 4. The ball engaging surface 25 is sloped with a straight gradient prior to assembly and is configured to compress against the spherical surface of the valve member 3 when the valve 1 is assembled. When the valve 1 is assembled and the valve member 3 is compressed against the ball engaging surface 25, has a profile which matches and abuts the spherical surface of the valve member 3 when the valve member 3 is in a fully open or fully closed position. Each valve seat is preferably formed from a resilient material which has a low friction coefficient, such as plastic or a plastics material such as polytetrafluoroethylene (PTFE).

In order to assemble the valve 1, it is convenient to first fit a sealing member 6 such as an O-ring into a sealing member seat of the first end cap 4. The first end cap 4 is then inserted into the valve body 2 such that the stop-face 11 of the first end cap abuts a corresponding inner ledge 10 of the valve body 2. Once the first end cap 4 is correctly positioned, it is then attached to the valve body by plastic deformation of the lip 8 of the valve body which is positioned around the first end cap 4 so as to envelop the connecting portion 9 of the first end cap.

Following attachment of the first end cap 4, a valve seat 5 is fitted to the housing portion 16 of the first end cap 4 via the second end of the valve body 2. It should be noted that the valve seat 5 could also be fitted to the housing portion 16 of the first end cap 4 prior to fitting of the first end cap 4.

The valve member 3 and stem 7 are next inserted into the valve body 2 such that the valve member 3 abuts the ball engaging surface 25 of the valve seat 5 which is fitted to the first end cap 4 and such that the stem 7 slots into the notch provided in the valve member 3. Any seals and/or O-rings associated with the stem 7 would also be inserted into the valve body 2 at this stage.

Following insertion of the valve member 3 and stem 7 into the valve body 2, it is convenient to first fit a second sealing member 6 such as an O-ring into a sealing member seat of a second end cap 4. Following this step, a second valve seat 5 is inserted into the housing portion 16 of the second end cap 4 such that the annular flat face 24 of the second valve seat 5 abuts the inner annular plane 23 of the housing portion 16 of the second end cap 4 to form an end cap 4 sub-assembly.

End cap 4 sub-assembly is then inserted into the valve body 2, such that the ball engaging surface 25 of the second valve seat 5 abuts the inserted valve member 3 and the stop-face 11 of the second end cap abuts the corresponding inner ledge 10 of the valve body. The second end cap is then attached to the valve body 2 via plastic deformation of the corresponding other lip 8 of the valve body 2, enveloping the connecting portion 9 of the second end cap, thus sealing the ball and completing the valve 1.

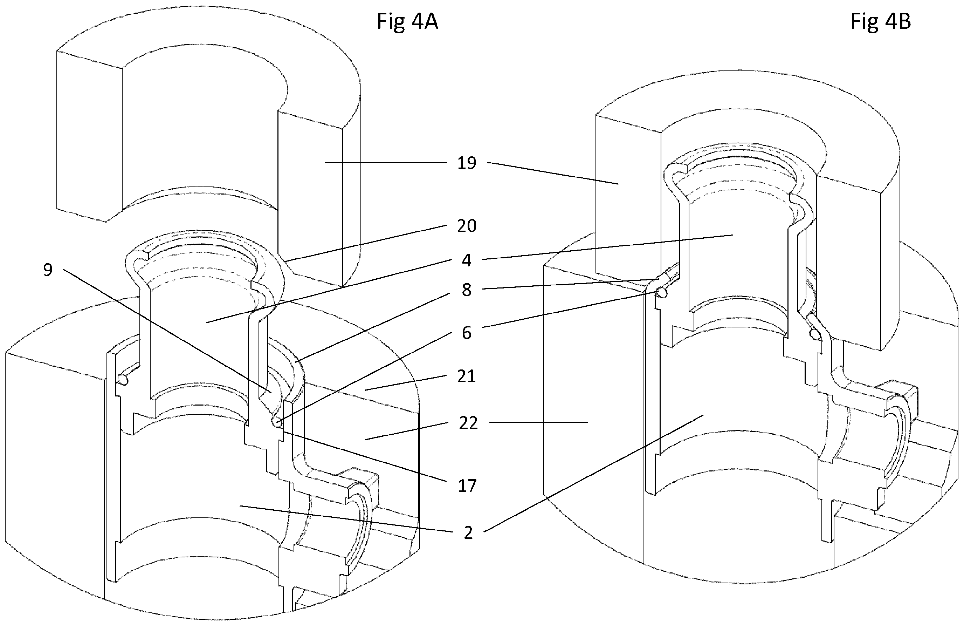

One specific method of plasticly deforming the lip 8 of the valve body 2 is shown in figures 4A and 4B.

In figure 4A, a valve body 2 is placed and temporarily fixed into a support 22 (or "jig") of a coining tool such that the valve body 2 is held firmly in place while allowing a lip 8 of the valve body to protrude beyond a flat face 21 of the support 22. The flat face 21 of the support 22 may be located at the top of the support 22 as depicted in figure 4A. The support 22 of the coining tool is substantially tubular in shape, having a central socket into which the tubular portion of the valve body 2 may be inserted. The support 22 also comprises a slot along its length on one side dimensioned such that the stem housing portion 32 of the valve body may also be inserted into the support 22. The depth of the slot along the length determines how far the valve body 2 may be inserted into the support 22, with the lower side of the stem housing portion of the valve body abutting the bottom of the slot when fully inserted.

An end cap 4 and a fitted sealing member 6 may be inserted into the valve body 2 prior to or after insertion of the valve body 2 into the support 22 but must be inserted before deformation of the lip 8 of the valve body. The end cap 4 is inserted into the valve body such that the stop-face 11 of the first end cap abuts a corresponding inner ledge 10 of the valve body 2. The outmost edge (relative to the valve body 2) of the bracing portion 17 of the end cap 4 also aligns with the flat face 21 of the support 22 when the end cap 4 is fully inserted into the valve body 2 which is placed within the support 22.

Once the valve body 2, end cap 4 and associated sealing member 6 are correctly positioned and aligned within the support 22, a pressing element 19 of the coining tool presses down onto the protruding section of the lip 8, plasticly deforming the lip 8, as seen in figure 4B, such that when the pressing element 19 is removed, the plasticly deformed lip retains its pressed shape.

The pressing element 19 is tubular in form, with the lower face comprising a pressing portion 20. The pressing element 19 has an outer diameter which is larger than the outer diameter of the valve body 2 and an inner diameter which is smaller than the inner diameter of the lip portion of the valve body but broader than the outer diameter of the attachment end 14 of the end cap 4, thereby enabling passage of the pressing element 19 over the attachment end 14 of the end cap 4 during pressing. The pressing portion 20 comprises a chamfered edge between the inner surface of the pressing element 19 and the lower face of the pressing portion 20. The chamfered edge of the pressing portion 20 is configured to apply force to the lip 8 in a downward and radially inward direction, when the lip 8 is located beneath the chamfered edge of the pressing portion 20 and is being pressed on by the pressing portion 20.

During pressing of the lip 8, the chamfered edge of the pressing portion 20 presses onto the outer edge of the lip 8 of the valve body, bending the lip 8 in the process such that a portion of the lip 8 is plasticly deformed to envelop the sealing member 6 and the connecting portion 9 of the fitted end 12 of the end cap 4, thereby attaching the end cap 4 to the valve body 2 with a tight seal formed around the sealing member 6 and the connecting portion 9. The portion of the lip 8 which is plasticly deformed is bent such that it bends inwardly with an angle of approximately 45 degrees relative to the tubular axis of the valve body, conforming to the shape of both the connecting portion 9 of the fitted end 12 and the chamfered edge of the pressing portion 20.

The pressing is caused by the pressing element 19 and the support 22 being brought together while the valve body 2 is situated within the holding apparatus. The extent to which the pressing element 19 and the support 22 are brought together during plastic deformation of the lip 8 may be determined by pressing machinery which controls the pressing element. The extent to which the pressing element 19 and the holding apparatus are brought together may also be limited by the lower face of the axial end of the pressing element 19 abutting the top face of the support 22, thereby preventing any further movement of the pressing element 19 relative to the support 22. Use of a coining tool results in uniform and consistent force being applied every time a plasticly deformed connection is made during production of valves of this type. Taking this approach, even an unskilled person would be able to achieve consistent duplication of results as they would only need to press a button to form the plasticly deformed connections to the correct specifications.

Following plastic deformation of the lip 8, the pressing element 19 is removed from the valve body 2 and the connected valve body 2 and end cap 4 are subsequently removed from the support 22.

The resultant plasticly deformed lip 8 is shown in Figures 2B, 3B and 4B. The plasticly deformed lip 8 has a form which follows a straight profile as the lip extends from the centre of the valve body 2 toward the axial end of the valve body until the lip reaches the end of the bracing portion 17 of the fitted end 12 of the end cap 4, after the bracing portion 17, the plasticly deformed lip 8 curves inwardly around the sealing member 6 which is attached to the end cap 4, and then continues with an inwardly straight inclined directionality which matches the profile of the connecting portion 9 of the fitted end 12 of the end cap 4. The plasticly deformed lip 8 as depicted in the figures is plasticly deformed to be bent with a continual thickness, rather than being squashed such that it has a thinner profile in the bent region. In embodiments which are not shown, it may be desirable to further slightly squash the plasticly deformed lip 8 such that it may form an even tighter seal around the fitted end 12 of the end cap 4.

Whilst the above embodiment is described in relation to a coining process, other processes such as at least one of bending, rolling, clinching or stamping may be used to plasticly deform the lip 8 and achieve the same result of a consistent attachment.

Throughout this specific description, the terms up/down, top/bottom etc. have been used with reference to the directions shown in the figures, but those skilled in the art will appreciate that valves apparatus can be fitted and assembled at various angles based on the machinery utilised during assembly. Clearly, the terms up/down, top/bottom etc. are used not in a limiting sense, but for the sake of explaining one particular arrangement shown.

The above embodiment is described by way of example only. Many variations are possible without departing from the scope of the invention as defined in the appended claims.

## Claims

1. A valve (1) comprising at least a valve member (3), a valve body (2) and an end cap (4); wherein the end cap (4) comprises a connecting portion (9); and the valve body (2) comprises a plasticly deformed lip (8); wherein the plasticly deformed lip (8) is configured such that it at least partially envelops the connecting portion (9), thereby attaching the end cap (4) to the valve body (2); wherein a fitted end (12) of the end cap (4) comprises the connecting portion (9), a stop-face (11) of the end cap (4) and a housing portion (16), **characterised in that**:
the valve body (2) comprises an inner ledge (10), which provides a stop surface which abuts the stop-face (11) of the end cap (4).

2. A valve (1) according to claim 1, wherein the connecting portion (9) comprises a sloped surface, wherein the sloped surface begins at the interface between an intermediate portion (13) and the fitted end (12), and wherein the sloped surface ends before reaching the stop-face (11) of the end cap (4); wherein a tubular outer diameter of the fitted end (12) is continuous between the sloped surface and the stop-face (11) of the end cap (4), forming a bracing portion (17), and wherein the housing portion (16) extends beyond the stop-face (11) of the end cap (4).

3. A valve (1) according to claim 2, wherein the tubular diameter of the plasticly deformed lip (8) reduces such that the inner surface of the plasticly deformed lip (8) conforms to the sloped surface of the connecting portion (9).

4. A valve (1) according to any of claims 1 to 3, wherein the valve body (2) comprises a thicker tubular portion (15) and a thinner tubular portion, and wherein the thicker tubular portion (15) encloses the valve member (3).

5. A valve (1) according to claim 4, wherein the thinner tubular portion comprises the plasticly deformed lip (8).

6. A valve (1) according to claims 4 or 5, wherein the inner ledge (10) is formed at the point where the thicker tubular portion (15) meets the thinner tubular portion.

7. A valve (1) according to any preceding claim wherein the plasticly deformed lip (8) of the valve body (2) extends axially beyond the inner ledge (10).

8. A valve (1) according to any preceding claim wherein a sealing member (6) is provided between the plasticly deformed lip (8) and the connecting portion (9).

9. A valve (1) according to any preceding claim wherein the plasticly deformed lip (8) is formed of metal.

10. A valve (1) according to any preceding claim wherein the valve (1) is a ball valve.

11. A method of assembling a valve (1) comprising the steps of: placing an end cap (4) against a valve body (2) and plasticly deforming a lip (8) of the valve body (2) around a corresponding connecting portion (9) of the end cap (4), thereby attaching the end cap (4) to the valve body (2), **characterised in that**:
prior to the plastic deformation step, the method comprises the steps of: inserting a valve member (3) into the valve body (2); and inserting at least a portion of the end cap (4) into the valve body (2), wherein the at least a portion of the end cap (4) is inserted into the valve body (2) until an inner ledge (10) of the valve body (2) abuts a stop-face (11) of the end cap (4).

## Patentansprüche

1. Ventil (1), das mindestens ein Ventilelement (3), einen Ventilkörper (2) und eine Endkappe (4) aufweist; wobei die Endkappe (4) einen Verbindungsabschnitt (9) aufweist; und der Ventilkörper (2) eine plastisch verformte Lippe (8) aufweist; wobei die plastisch verformte Lippe (8) so ausgebildet ist, dass sie den Verbindungsabschnitt (9) zumindest teilweise umhüllt, wodurch die Endkappe (4) an dem Ventilkörper (2) befestigt wird; wobei ein eingepasstes Ende (12) der Endkappe (4) den Verbindungsabschnitt (9), eine Anschlagfläche (11) der Endkappe (4) und einen Gehäuseabschnitt (16) aufweist, **dadurch gekennzeichnet, dass**
der Ventilkörper (2) einen inneren Vorsprung (10) aufweist, der eine Anschlagoberfläche bildet, die an der Anschlagfläche (11) der Endkappe (4) anliegt.

2. Ventil (1) nach Anspruch 1, wobei der Verbindungsabschnitt (9) eine abgeschrägte Oberfläche aufweist, wobei die abgeschrägte Oberfläche an der Schnittstelle zwischen einem Zwischenabschnitt (13) und dem eingepassten Ende (12) beginnt, und wobei die abgeschrägte Oberfläche vor Erreichen der Anschlagfläche (11) der Endkappe (4) endet; wobei ein rohrförmiger Außendurchmesser des eingepassten Endes (12) zwischen der abgeschrägten Oberfläche und der Anschlagfläche (11) der Endkappe (4) durchgehend ist und einen Stützabschnitt (17) bildet, und wobei der Gehäuseabschnitt (16) sich über die Anschlagfläche (11) der Endkappe (4) hinaus erstreckt.

3. Ventil (1) nach Anspruch 2, wobei sich der Rohrdurchmesser der plastisch verformten Lippe (8) derart verringert, dass sich die Innenfläche der plastisch verformten Lippe (8) der abgeschrägten Oberfläche des Verbindungsabschnitts (9) anpasst.

4. Ventil (1) nach einem der Ansprüche 1 bis 3, wobei der Ventilkörper (2) einen dickeren rohrförmigen Abschnitt (15) und einen dünneren rohrförmigen Abschnitt aufweist, und wobei der dickere rohrförmige Abschnitt (15) das Ventilelement (3) umschließt.

5. Ventil (1) nach Anspruch 4, wobei der dünnere rohrförmige Abschnitt die plastisch verformte Lippe (8) aufweist.

6. Ventil (1) nach Anspruch 4 oder 5, wobei der innere Vorsprung (10) an der Stelle gebildet ist, an der der dickere rohrförmige Abschnitt (15) auf den dünneren rohrförmigen Abschnitt trifft.

7. Ventil (1) nach einem der vorhergehenden Ansprüche, wobei sich die plastisch verformte Lippe (8) des Ventilkörpers (2) axial über den inneren Vorsprung (10) hinaus erstreckt.

8. Ventil (1) nach einem der vorhergehenden Ansprüche, wobei ein Dichtungselement (6) zwischen der plastisch verformten Lippe (8) und dem Verbindungsabschnitt (9) vorgesehen ist.

9. Ventil (1) nach einem der vorangehenden Ansprüche, wobei die plastisch verformte Lippe (8) aus Metall gebildet ist.

10. Ventil (1) nach einem der vorhergehenden Ansprüche, wobei das Ventil (1) ein Kugelventil ist.

11. Verfahren zum Montieren eines Ventils (1), das die folgenden Schritte aufweist: Anbringen einer Endkappe (4) an einem Ventilkörper (2) und plastisches Verformen einer Lippe (8) des Ventilkörpers (2) um einen entsprechenden Verbindungsabschnitt (9) der Endkappe (4) herum, wodurch die Endkappe (4) am Ventilkörper (2) befestigt wird, **dadurch gekennzeichnet, dass**:
vor dem Schritt der plastischen Verformung das Verfahren die folgenden Schritte aufweist: Einsetzen eines Ventilelements (3) in den Ventilkörper (2); und Einsetzen mindestens eines Teils der Endkappe (4) in den Ventilkörper (2), wobei der mindestens eine Teil der Endkappe (4) in den Ventilkörper (2) eingesetzt wird, bis ein innerer Vorsprung (10) des Ventilkörpers (2) an einer Anschlagfläche (11) der Endkappe (4) anliegt.

## Revendications

1. Vanne (1) comprenant au moins un élément (3) de vanne, un corps (2) de vanne et une coiffe (4) d'extrémité ; dans laquelle la coiffe (4) d'extrémité comprend une partie (9) de liaison ; et le corps (2) de la vanne comprend une lèvre (8) déformée plastiquement ; dans laquelle la lèvre (8) déformée plastiquement est configurée de manière à envelopper au moins en partie la partie (9) de liaison en fixant ainsi la coiffe (4) d'extrémité au corps (2) de la vanne ; dans laquelle une extrémité (12) ajustée de la coiffe (4) d'extrémité comprend la partie (9) de liaison, une face (11) d'arrêt de la coiffe (4) d'extrémité et une partie (16) de logement, **caractérisée en ce que** :
le corps (2) de la vanne comprend une moulure (10) intérieure, qui procure une surface de butée qui vient en butée sur la surface (11) d'arrêt de la coiffe (4) d'extrémité.

2. Vanne (1) suivant la revendication 1, dans laquelle la partie (9) de liaison comprend une surface en pente, dans laquelle la surface en pente commence à l'interface entre une partie (13) intermédiaire et l'extrémité (12) ajustée, et dans laquelle la surface en pente se termine avant d'atteindre la face (11) d'arrêt de la coiffe (4) d'extrémité ; dans laquelle un diamètre tubulaire extérieur de l'extrémité (12) ajustée est continu entre la surface en pente et la face (11) d'arrêt de la coiffe (4) d'extrémité, en formant une partie (17) d'entretoisement, et dans laquelle la partie (16) de logement s'étend au-delà de la face (11) d'arrêt de la coiffe (4) d'extrémité.

3. Vanne (1) suivant la revendication 2, dans laquelle le diamètre tubulaire de la lèvre (8) déformée plastiquement se réduit de manière à ce que la surface intérieure de la lèvre (8) déformée plastiquement se conforme à la surface en pente de la partie (9) de liaison.

4. Vanne (1) suivant l'une quelconque des revendications 1 à 3, dans laquelle le corps (2) de la vanne comprend une partie (15) tubulaire plus épaisse et une partie tubulaire plus mince, et dans laquelle la partie (15) tubulaire plus épaisse entoure l'élément (3) de vanne.

5. Vanne (1) suivant la revendication 4, dans laquelle la partie tubulaire plus mince comprend la lèvre (8) déformée plastiquement.

6. Vanne (1) suivant les revendications 4 ou 5, dans laquelle la moulure (10) intérieure est formée au point où la partie (15) tubulaire plus épaisse rencontre la partie tubulaire plus mince.

7. Vanne (1) suivant l'une quelconque des revendications précédentes, dans laquelle la lèvre (8) déformée plastiquement du corps (2) de la vanne s'étend axialement au-delà de la moulure (10) intérieure.

8. Vanne (1) suivant l'une quelconque des revendications précédentes, dans laquelle un élément (6) d'étanchéité est prévu entre la lèvre (8) déformée plastiquement et la partie (9) de liaison.

9. Vanne (1) suivant l'une quelconque des revendications précédentes, dans laquelle la lèvre (8) déformée plastiquement est en un métal.

10. Vanne (1) suivant l'une quelconque des revendications précédentes, dans laquelle la vanne (1) est une vanne à boisseau sphérique.

11. Procédé de montage d'une vanne (1) comprenant les stades dans lesquels : on met une coiffe (4) d'extrémité contre un corps (2) de vanne et on déforme plastiquement une lèvre (8) du corps (2) de vanne autour d'une partie (9) de liaison correspondante de la coiffe (4) d'extrémité, en fixant ainsi la coiffe (4) d'extrémité au corps (2) de vanne, **caractérisé en ce que** :
avant le stade de déformation plastique, le procédé comprend les stades dans lesquels : on insère un élément (3) de vanne dans le corps (2) de vanne ; et on insère au moins une partie de la coiffe (4) d'extrémité dans le corps (2) de vanne, la au moins une partie de la coiffe (4) d'extrémité étant insérée dans le corps (2) de vanne jusqu'à ce qu'une moulure (10) intérieure du corps (2) de vanne vienne en butée sur une face (11) d'arrêt de la coiffe (4) d'extrémité.
